# EUROPÄISCHE PATENTSCHRIFT

(11) **EP 2 100 513 B1**
(45) Veröffentlichungstag und Bekanntmachung des Hinweises auf die Patenterteilung: **16.05.2012**
(21) Anmeldenummer: 09154646.5
(22) Anmeldetag: 09.03.2009
(51) Int. Cl.: B02C 18/30, B02C 18/38

(54) **Vorrichtung zum Fördern und Bearbeiten von Lebensmitteln**
Device for supplying and processing food
Dispositif de transport et de traitement d'aliments

(30) Priorität: 10.03.2008 DE 102008013393
(43) Veröffentlichungstag der Anmeldung: 16.09.2009
(73) Patentinhaber: VEMAG Maschinenbau GmbH, 27283 Verden/Aller (DE)
(72) Erfinder: Hagedorn, Jan-Nils, 28870, Ottersberg (DE)
(74) Vertreter: Andres, Mark

(56) Entgegenhaltungen:
- WO-A-2005/110099
- DD-A1- 108 214
- DE-A1- 19 942 311
- DE-C- 811 793
- US-A- 3 414 925

## Beschreibung

Die vorliegende Erfindung betrifft eine Vorrichtung zum Fördern und Bearbeiten von Lebensmitteln, insbesondere Fleisch, mit einer Fülleinrichtung, einem Wolf mit einem Einlass und einem Auslass, und Antriebsmitteln zum Antrieb von in einem Gehäuse des Wolfes angeordneten Schneidelementen.

Für die Herstellung von Lebensmitteln, insbesondere Fleisch mit feiner Konsistenz müssen gewöhnlicherweise verschiedene Ausgangsstoffe bzw. Zutaten vermischt und gemeinsam verarbeitet werden. Dies geschieht mithilfe von Vorrichtungen der eingangs beschriebenen Art (vgl. Dokumente DD 108 214 und DE 199 42 311). In solchen Vorrichtungen werden die verschiedenen Ausgangsstoffe wie beispielsweise Fleisch- und/oder Teigwaren sowie pflanzliche Zutaten als sogenanntes Brät in einen Fülltrichter eingeführt, welcher einer Fülleinrichtung zugeordnet ist, oft auch als Füllmaschine bezeichnet. Innerhalb dieser Fülleinrichtung kommt es zu einer Durchmischung der einzelnen Zutaten, und eine Fördereinrichtung wie etwa ein Schneckentrieb fördert die vermengten Zutaten zu einem an die Vorrichtung angeschlossenen Wolf. Je nachdem, wie die Konsistenz der eingeführten Ausgangsstoffe ist und je nachdem wie die weiteren Bearbeitungsschritte für die Lebensmittelverarbeitung ausgestaltet sind, kann der Wolf ein Füllwolf, Trennwolf oder auch Schneidwolf sein. Ein solcher Wolf enthält Schneidelemente, die das zugeführte Material zerkleinern und durch eine am Auslass des Wolfes angeordnete und den Auslass begrenzende Öffnung austreiben, die durch sogenannte Lochscheiben begrenzt sind. Die Schneidelemente werden in bekannter Art und Weise von Antriebsmitteln angetrieben, die beispielsweise über eine Antriebswelle ein Moment auf die Schneidelemente übertragen. Dieses Antriebsmoment versetzt die Schneidelemente in Rotation, was den Zerkleinerungsvorgang bewirkt. Insbesondere bei der Verarbeitung von Fleisch setzen sich während des Betriebes unweigerlich Partikel unterschiedlicher Größe im Inneren des Wolfes und vorzugsweise im Bereich der Schneidelemente fest. Diese Partikel können beispielsweise aus Fett, Fleisch, Knorpel oder Knochen bestehen. Um einen konstanten Austrag an zerkleinerter Masse zu erhalten und Beschädigungen der Vorrichtung zu vermeiden, ist es erforderlich, diese Partikel aus dem Inneren des Wolfes zu entfernen. Bei den bekannten Vorrichtungen zum Fördern und Bearbeiten von Lebensmitteln ist der Wolf fest mit der Vorrichtung verbunden. Um den Bereich, in welchem die Schneidelemente angeordnet sind, zu reinigen, ist es daher notwendig, die am Auslass des Wolfes angeordnete Lochscheibe zu entfernen und anschließend mit einem Abziehwerkzeug die Schneidelemente aus dem Wolf herauszuziehen. Diese Abziehwerkzeuge haben sich in der Praxis als schwer handhabbar herausgestellt.

Ein wesentliches Problem der bekannten Vorrichtung ist es, dass ungeachtet möglicher Sicherheitsvorkehrungen für die Bedienung der Vorrichtung bei geöffneten Wolf die Gefahr besteht, dass die Vorrichtung in Gang gesetzt wird, während ein Bediener den Ausbau der Schneidelemente vornimmt. Es ist ersichtlich, dass dies ein erhebliches Verletzungsrisiko birgt und bis zum Verlust von Gliedmaßen führen kann.

Eine Aufgabe der vorliegenden Erfindung war es demzufolge, eine Vorrichtung anzugeben, die das Verletzungsrisiko während des Wartens des Wolfes möglichst weitgehend vermindert.

Die vorliegende Erfindung löst das vorgenannte Problem bei einer Vorrichtung der eingangs genannten Art durch Schneidelemente, die vollständig von den Antriebsmitteln entkoppelbar sind, und dadurch, dass die Schneidelemente so im Gehäuse des Wolfs angeordnet sind, dass sie mittels einer auf der Seite des Einlasses aufbringbaren Kraft durch den Auslass aus dem Gehäuse des Wolfes entfernbar sind.

Eine solche Anordnung der Schneidelemente bringt den Vorteil mit sich, dass bei der Demontage des Wolfes von der Vorrichtung automatisch ein Trennen der Schneidelemente von den Antriebsmitteln erfolgt. Durch diese Art vollständige Entkoppelbarkeit müssen vom Bediener keine weiteren Schritte unternommen werden, um die Sicherheit der Vorrichtung zu gewährleisten, wenn die Schneidelementes des Wolfes zu Reinigungszwecken entfernt werden. Für eine solche Ausgestaltung der Vorrichtung ist es weiterhin von Vorteil, wenn die Schneidelemente auf die als Antriebswelle ausgebildeten Antriebsmittel aufsteckbar sind. Dies ermöglicht ein jederzeitiges Herausdrücken Schneidelemente von der Antriebswelle durch Demontage des Wolfes von der Vorrichtung. Durch die Kombination der vollständigen Entkoppelbarkeit und ein Herausdrücken der Schneidelemente mittels einer auf der Seite des Einlasses aufbringbaren Kraft durch den Auslass des Gehäuses des Wolfes wird eine hohe Sicherheit ohne Verletzungsgefahr und eine einfache Demontage und Reinigung erreicht.

In einer weiteren Ausführungsform der erfindungsgemäßen Vorrichtung sind die Schneidelemente mittels eines auf der Seite des Einlasses in das Innere des Wolfs einführbaren Abdrückwerkzeugs aus dem Gehäuse herausdrückbar. Hierin zeigt sich ein weiterer Vorteil der Erfindung. Eine solche Ausgestaltung der Schneidelemente im Inneren des Wolfes ermöglicht es nämlich die Schneidelemente aus dem Wolfsgehäuse herauszudrücken, anstatt sie wie bislang herausziehen zu müssen. Ein Abdrückwerkzeug sollte vorteilhafterweise so gestaltet sein, dass mittels des Abdrückwerkzeuges die Schneidelemente zur Seite des Auslasses hin herausgedrückt werden können, indem das Abdrückwerkzeug auf der jeweils gegenüberliegenden Seite im Bereich des Einlasses in das Innere des Wolfes eingeführt wird.

Gemäß einer Weiterbildung der vorgenannten Ausführungsform sind eine oder mehrere Lochscheiben so in dem Wolf angeordnet, dass sie mittels des Abdrückwerkzeugs zusammen mit den Schneidelementen auf der Seite des Auslasses aus dem Gehäuse des Wolfs entfernbar sind. Die Lochscheiben sind ebenso für eine Reinigung des Wolfs aus dem Gehäuse zu entfernen wie die Schneidelemente. Aus diesem Grund erscheint es vorteilhaft, diese in einem Arbeitsgang mittels des Abdrückwerkzeuges zusammen mit dem Schneidelementen aus dem Gehäuse des Wolfes zu entfernen. Durch diese Maßnahme lässt sich der Zeitaufwand für eine Reinigung bzw. Wartung des Wolfs verkürzen.

In einer weiteren bevorzugten Ausführungsform weist das Gehäuse des Wolfs auf der Seite des Einlasses eine im Wesentlichen zentral angeordnete Öffnung zur Aufnahme des Abdrückwerkzeugs auf. Die Seite, welche die Öffnung zur Aufnahme des Abdrückwerkzeuges aufweist, ist so zu wählen, dass sie der Seite gegenüberliegt, zu welcher die Schneidelemente und ggf. die Lochscheiben aus dem Wolfsgehäuse herausgedrückt werden sollen. Wenngleich die zentrale Anordnung der Öffnung als vorteilhaft im Hinblick auf die gleichmäßige Kraftverteilung durch das Abdrückwerkzeug angesehen wird, sind abweichende Anordnungen der Öffnung denkbar. Dies ist vor allem abhängig von der Ausgestaltung des Abdrückwerkzeugs. So kann es beispielsweise auch von Vorteil sein, dass Abdrückwerkzeug so zu gestalten, dass einer oder mehrere Abschnitte gleichzeitig an verschiedenen Stellen in das Innere des Wolfs eingeführt werden, um so beispielsweise am Rand der Schneidelemente oder Lochscheiben an diese anzugreifen. Eine solche Anordnung und Ausgestaltung des Abdrückwerkzeugs ist sinnvoll, um ein Verkanten der auszupressenden Teile zu verhindern.

Die Vorrichtung weist Tragmittel auf, die zum Tragen des Wolfes während des Montierens ausgebildet sind.

Unter dem Begriff des Montierens wird dabei sowohl die Montage als auch die Demontage des Wolfes an bzw. von der Vorrichtung verstanden. Die Tragmittel stützen den Wolf, so dass dieser von der Vorrichtung gelöst werden kann, ohne sich zu verkanten oder sich so von der Vorrichtung zu lösen, dass eine erneute Anbringung an der Vorrichtung auch ohne aufwändige Richtmaßnahmen möglich ist. Dadurch wird es möglich, den Wolf sicher von der Vorrichtung zu lösen, wenn ein Reinigungsvorgang bevorsteht, und ihn vom Antrieb zu trennen. In einem Zustand, in welchem der Wolf nicht mehr mit dem Antrieb der Vorrichtung verbunden ist, ist es nicht mehr möglich, durch ein versehentliches Anschalten der Vorrichtung die Schneidelemente in Bewegung zu setzen. Gleichzeitig wird durch die Tragmittel gewährleistet, dass der Wolf nach Beendigung des Reinigungsvorgangs problemlos wieder an die Vorrichtung angeschlossen werden kann. Die Tragmittel stützen somit den Wolf in zumindest einer angeschlossenen Position sowie in einer Position, in der der Wolf von der Vorrichtung und insbesondere von den Antriebsmitteln beabstandet angeordnet ist.

Weiterhin sind die Trag-Mittel dazu ausgebildet, den Wolf zumindest teilweise während einer Bewegung koaxial zu einer Achse der Antriebsmittel zu tragen. Die Möglichkeit, den Wolf koaxial zu den Antriebsmitteln von der Vorrichtung zu lösen, ist besonders vorteilhaft. Als Antriebselement wird insbesondere eine Welle eingesetzt werden, die mit einem korrespondierenden Nabenelement der Schneidelemente in Eingriff bringbar ist. Der Bediener ist somit in der Lage, die Schneidelemente axial von der Antriebswelle abzuziehen und ebenso durch eine axiale Bewegung nach vollzogener Reinigung des Wolfes wieder mit dem Antrieb zu verbinden. Durch die koaxiale Anordnung und die koaxiale Bewegbarkeit des Wolfes in Bezug auf die Antriebsmittel lässt sich der Kalibrier- und Richtaufwand minimieren.

Die Trag-Mittel sind mit dem Wolf und mit der Vorrichtung verbunden. Auf diese Weise ist eine sehr hohe Wiederholgenauigkeit bei der Bewegung des Wolfes relativ zu der Vorrichtung gegeben. Dadurch, dass die Tragmittel in Bezug auf die Vorrichtung und den Wolf durch die Verbindung jeweils eindeutig definierte Bezugspunkte aufweisen, lässt sich der Wolf auch bei wiederholtem Montieren und Demontieren zuverlässig und genau an der Vorrichtung positionieren, und es werden keine zusätzlichen Trageinrichtungen gebraucht.

Die Trag-Mittel sind als mehrgliedriges Scharnier ausgebildet. Ein Scharnier, welches insbesondere zwei oder mehr Scharniergewehre aufweist, ermöglicht es auf konstruktiv einfache Weise, den Wolf geradlinig über zumindest eine gewisse Strecke zu bewegen. Dies ist insbesondere dann von Vorteil, wenn wie im vorliegenden Fall eine koaxiale Bewegung zwischen zwei Elementen erreicht werden soll. Des Weiteren erfüllt ein mehrgliedriges Scharnier auch in Verbindung mit großen zu bewegenden Teilen (Wölfe mit einem Durchmesser von mehr als 100 mm) die Anforderungen an die Positioniergenauigkeit. Das mehrgliedrige Scharnier ist so ausgebildet, dass der Wolf in einem ersten Bereich im Wesentlichen koaxial zu der Achse der Antriebsmittel bewegbar, und in einem zweiten Bereich in eine seitliche Richtung schwenkbar ist. Eine derartige Auslegung des mehrgliedrigen Scharniers ist insbesondere deswegen von Vorteil, weil der Wolf zunächst koaxial zu der Antriebswelle vom Bediener von der Vorrichtung entfernt werden kann, und anschließend zu einer Seite hin geschwenkt werden kann, was den Zugang zum Inneren des Wolfes deutlich vereinfacht.

Gemäß einer weiteren Ausführungsform der Erfindung sind die Trag-Mittel als eine Linearführung ausgebildet. Durch das Ausführen der Trag-Mittel als linear geführtes System lässt sich die Richtungsgenauigkeit in Richtung der Längsachse der Antriebswelle weiter steigern. Dies kann von Vorteil sein, wenn konstruktionsbedingt eine besonders genaue Führung des Wolfes erwünscht oder erforderlich ist.

Vorzugsweise ist am Auslass des Wolfes eine in deren Zentrum geschlossene Lochscheibe angeordnet. Diese Ausführung einer geschlossenen Lochscheibe hat sich im Betrieb als besonders vorteilhaft herausgestellt. Durch die vollständige Verdeckung des Endes der Antriebsmittel, aus der Richtung des Auslasses betrachtet, macht es einerseits unmöglich, die Lochscheibe und ggf. die dahinterliegenden Schneidelemente aus dem Gehäuse des Wolfes herauszuziehen, ohne vorher den Wolf mechanisch von der Vorrichtung entkoppelt zu haben. Ein Umgehen dieser Sicherheitsvorkehrung ist somit bei Verwendung einer geschlossenen Lochscheibe nicht mehr möglich. Des weiteren hat sich herausgestellt, dass im Betrieb ein verbesserter Materialsaustrag aus dem Wolf erfolgen kann, wenn eine geschlossene Lochscheibe auslassseitig im Wolf angebracht ist.

In einer weiteren bevorzugten Ausführungsform der vorliegenden Erfindung weist der Wolf Griffe auf, welche zur Bewegung des Wolfes relativ zu der Vorrichtung ausgebildet sind. Es hat sich als vorteilhaft herausgestellt, Griffe an der äußeren Mantelfläche des Wolfgehäuses vorzusehen, mithilfe derer der Bediener den Wolf in einer manuell geführten Bewegung koaxial zu den Antriebsmitteln von der Vorrichtung abziehen kann. Auch das Umschwenken des Wolfs von der Koaxialbewegung in eine Schwenkbewegung zu einer Seite hin ist mit Haltegriffen leicht durchführbar.

In einer weiteren vorteilhaften Ausführungsform der Erfindung sind Arretierungsmittel so ausgebildet, dass sie das Gehäuse des Wolfs lösbar mit dem Anschluss der Vorrichtung verbinden. Solche Arretierungsmittel können beispielsweise durch einen Bajonettverschluss ausgebildet sein. Die Arretierungsmittel werden betätigt, nachdem der Wolf an die Vorrichtung angeschlossen wurde, um ihn ortsfest an der Vorrichtung zu arretieren. Am Beispiel eines Bajonettverschlusses wird dies erreicht, indem korrespondierende Vorsprünge und Ausnehmungen des Wolfs und der Arretierungsmittel ineinander eingreifen und durch eine Rotationsbewegung der Arretierungsmittel aneinander befestigt werden. Es sind allerdings auch vielfältige weitere Arretierungsmöglichkeiten denkbar. Es ist allerdings stets darauf zu achten, dass die axiale Position des Wolfes in Bezug auf die Vorrichtung und insbesondere in Bezug auf die Antriebsmittel durch das Betätigen der Arretierungsmittel nicht verändert wird.

Die Erfindung löst die Aufgabe weiterhin durch ein Verfahren zur Demontage eines Wolfs von einer Vorrichtung, insbesondere gemäß einem der Ansprüche 1 bis 8 zum Fördern und Bearbeiten von Lebensmitteln. Das Verfahren umfasst die Schritte: Entkoppeln des Wolfes von Antriebsmitteln, und Herausdrücken von Schneidelementen auf der Seite eines Auslasses aus dem Gehäuse des Wolfes. Aufgrund des Konstruktionsprinzips der erfindungsgemäßen Vorrichtung bietet sich das vorliegende erfindungsgemäße Verfahren an, um eine risikofreie Wartung des Wolfes bzw. der Vorrichtung vorzunehmen. Hierzu wird zunächst der Wolf mechanisch komplett von den Antriebsmitteln entkoppelt, beispielsweise indem die Arretierung gelöst wird, und anschließend erst können die Schneidelemente von der Seite des Einlasses in Richtung des Auslasses aus dem Gehäuse des Wolfs herausgedrückt werden. Bei Anwendung dieses Verfahrens kann es nicht dazu kommen, dass während des Umgangs mit den Schneidelementen versehentlich die Antriebsmittel die Schneidelemente in Gang setzen, was in der Vergangenheit bei bekannten Vorrichtungen und Verfahren immer wieder zu schweren Verletzungen geführt hat.

Der Vorgang des Entkoppeln des Wolfes wird in den Schritten axiales Abziehen des Wolfes von der Vorrichtung, und zumindest teilweises Schwenken des Wolfes zu einer Seite hin ausgeführt. Durch das axiale Abziehen des Wolfes werden die Schneidelemente von den Antriebsmitteln, die beispielsweise als Antriebswelle mit entsprechendem Wellenende ausgebildet sein können, abgezogen. Hierfür ist eine gradlinig geführte oder freihändig ausgeführte Bewegung des Wolfes notwendig. Im Anschluss an das Abziehen des Wolfes von den Antriebsmitteln ist es weiterhin erforderlich und wünschenswert, den Zugang zu der Einlass-Seite des Gehäuses des Wolfes zu erleichtern. Hierzu hat es sich als äußert vorteilhaft herausgestellt, den Wolf zu einer Seite hin schwenken zu können. Im Anschluss an das ausgeführte Schwenken des Wolfes hat ein Bediener ausreichend Platz und Handhabungsmöglichkeiten, das Innere des Wolfes zu einer Seite des Auslasses des Wolfes hin herauszupressen.

In einer Weiterbildung des erfindungsgemäßen Verfahrens wird das Herausdrücken der Schneidelemente aus dem Gehäuse des Wolfes mittels Einführens eines Abdrückwerkzeuges gemäß Anspruch 12, Aufbringen einer Druckkraft auf die Schneidelemente mittels des Abdrückwerkzeugs in Richtung der Seite des Auslasses des Gehäuses, und Herausdrücken der Schneidelemente aus dem Wolf durchgeführt. Es kann erforderlich oder vorteilhaft sein, das Einführen des Abdrückwerkzeuges durch weitere, dem konkreten Anwendungsfall entsprechend auszulegende Führungsmittel zu unterstützen, um ein Verkanten oder fehlerhaftes Einführen des Abdrückwerkzeuges zu verhindern. Weiterhin erscheint es denkbar, zur Unterstützung der Handkraft des Bedieners Mittel zur Verfügung zu stellen, die die Muskelkraft des Bedieners unterstützen, oder ersetzen. Beispielsweise kämen hierfür hydraulische oder pneumatische Werkzeuge in Frage. Das Herausdrücken der Schneidelemente aus dem Wolf könnte in einem solchen Fall auch von diesen Werkzeugen übernommen werden.

Gemäß einer weiteren Ausführungsform des erfindungsgemäßen Verfahrens werden eine oder mehrere Lochscheiben zusammen mit den Schneidelementen aus dem Wolf herausgedrückt. Auf diese Weise kann das gesamte mechanische Innenleben des Wolfes in einem Arbeitsgang zur Wartung und/oder Reinigung desselben aus dessen Gehäuse entfernt werden.

Gemäß eines weiteren Aspektes der vorliegenden Erfindung wird ein Abdrückwerkzeug, insbesondere zur Verwendung mit der Vorrichtung nach einem der Ansprüche 2 bis 8 bereitgestellt. Das Abdrückwerkzeug ist zur Einführung zumindest eines Abschnittes in das Innere eines Wolfes ausgebildet, und weist eine Kontaktfläche auf, die mit Schneidelementen und/oder einer oder mehreren Lochscheiben eines Wolfes in kraft- oder formschlüssigen Kontakt bringbar ist.

Das erfindungsgemäße Abdrehwerkzeug ist vorteilhafterweise so ausgestaltet, dass der Abschnitt, welcher in das Innere des Gehäuses des Wolfes einzuführen ist, einen Querschnitt aufweist, der mit dem Öffnungsquerschnitt der Öffnung in dem Gehäuse des Wolfes korrespondiert. Um ein Verkanten des Abdrückwerkzeugs zu verhindern, kann es weiterhin von Vorteil sein, Führungsabschnitte vorzusehen, die den in den Wolf einzuführenden Abschnitt führen. Diese Führungsabschnitte könnten beispielsweise durch die Wandflächen der korrespondierenden Öffnung im Gehäuse des Wolfes vorgesehen werden. Die Kontaktfläche des Abdrückwerkzeuges ist so gestaltet, dass das Abdrückwerkzeug nicht von den Schneidelementen bzw. Lochscheiben abrutschen kann, wenn es in das Innere des Gehäuses des Wolfes eingeführt worden ist. Dadurch, dass zwischen den Schneidelementen und/oder Lochscheiben und der Kontaktfläche des Abdrückwerkzeugs ein kraft- oder formschlüssiger Kontakt hergestellt wird, ist dies gewährleistet. Je nach Ausgestaltung der Schneidelemente und ihrer Zuordnung zum Gehäuse des Wolfs kann es wünschenswert sein, die Schneidelemente und/oder Lochscheiben beim Austreiben aus dem Wolf zu rotieren. Hierzu ist es vorteilhaft, wenn die Kontaktfläche in formschlüssigen Kontakt mit den auszutreibenden Teilen bringbar ist. Der Formschluss kann durch korrespondierende Vorsprünge und/oder Ausnehmungen gewährleistet werden.

Im erfindungsgemäßen Abdrückwerkzeug ist eine Kurbel vorgesehen, mittels derer die Ausdrückkraft auf die Schneidelemente aufbringbar ist.

Das Abdrückwerkzeug ist vorteilhaft so ausgebildet, dass mittels einer Gewinde-Stange, die mit einem Gewinde des Abdrückwerkzeugs zusammenwirkt, eine vorzugsweise durch die Kurbel oder motorisch aufgebrachte Drehbewegung umwandelbar ist in eine axiale Vorschubbewegung und Kraft, durch welche die Schneidelemente durch den Auslass des Wolfes herausgedrückt werden können.

Im Folgenden wird die Erfindung anhand beispielhafter Ausführungsformen unter Bezugnahme auf die beiliegenden Figuren näher beschrieben. Hierbei zeigt:
- Fig. 1: eine Teildarstellung einer bevorzugten Ausführungsform der vorliegenden Erfindung in einer Seitenansicht;
- Fig. 2: eine Seitenansicht der Vorrichtung aus Fig. 1 in einem anderen Betriebszu- stand;
- Fig. 3: eine Teildarstellung einer bevorzugten Ausführungsform der erfindungsge- mäßen Vorrichtung in einer Ansicht von oben;
- Fig. 4: eine Ansicht der erfindungsgemäßen Vorrichtung aus Fig. 3 von oben in einem alternativen Betriebszustand;
- Fig. 5: eine Ansicht der erfindungsgemäßen Vorrichtung aus in Figuren 3 von oben und 4 in einem alternativen Betriebszustand;
- Fig. 6: eine Nahansicht eines Ausführungsbeispiels eines Teils der erfindungsge- mäßen Vorrichtung; und
- Fig. 7: die Ansicht des in Fig. 6 dargestellten Teils in einem anderen Betriebszu- stand.

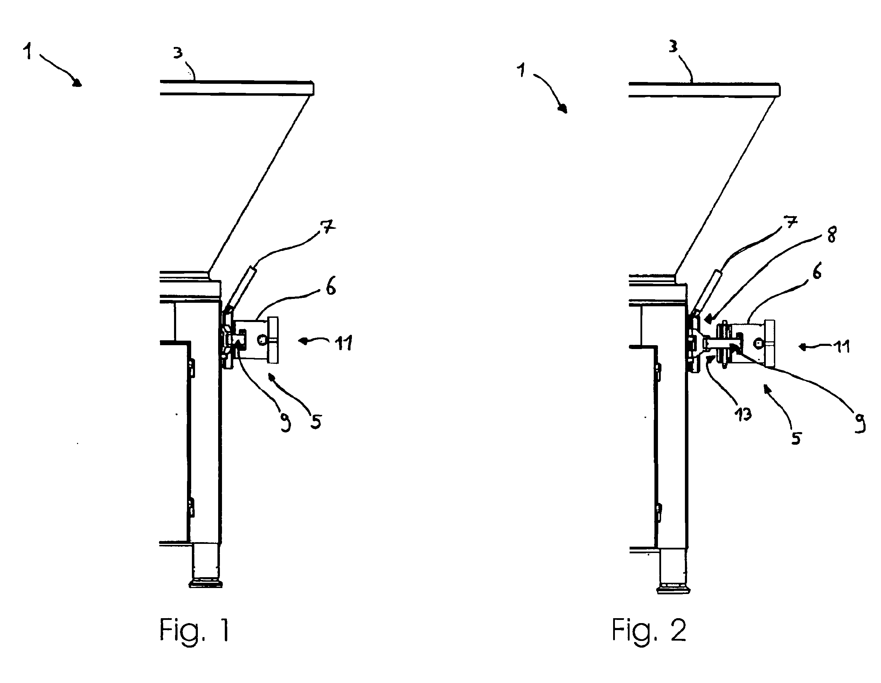

In Fig. 1 ist ein bevorzugtes Ausführungsbeispiel der erfindungsgemäßen Vorrichtung 1 teilweise in einer Seitenansicht abgebildet. Eine Fülleinrichtung 3 ist als Fülltrichter ausgebildet und oben auf der Vorrichtung 1 angebracht. Die Fülleinrichtung 3 ist dazu ausgebildet, Lebensmittel und insbesondere Fleisch sowie weitere zur Bearbeitung vorgesehene Zutaten aufzunehmen und über einen vorzugsweise motorisch angetriebenes (nicht dargestelltes) Förderwerk mit einander zu vermengen. Weiterhin ist das Förderwerk dazu ausgebildet, die vermengten Zutaten einem Wolf 5 zu zuführen, welcher der gewählten Darstellung seitlich an der Vorrichtung 1 angeordnet ist. Der Wolf 5 ist an der Vorrichtung 1 mittels einer Arretierung 7, die in der Darstellung als Bajonettverschluss ausgestaltet ist, an der Vorrichtung 1 befestigt. Weiterhin ist der Wolf 5 mittels Trag-Mitteln 9, die in diesem Ausführungsbeispiel als Doppelscharnier ausgebildet sind, mit der Vorrichtung verbunden. Der Wolf 5 weist ein Gehäuse 6 auf, welches zur Aufnahme von (nicht dargestellten) Schneidelementen sowie wenigstens einer Lochscheibe ausgebildet ist. Der Wolf weist einen Auslass 11 auf, durch welchen die durch die Schneidelemente zerkleinerten Zutaten von der Vorrichtung 1 abgegeben werden.

In Fig. 2 ist ein alternativer Betriebszustand der Vorrichtung aus Fig. 1 abgebildet. Der Wolf 5 befindet sich in einer von der Vorrichtung 1 beabstandeten Position. Weiterhin ist gezeigt, dass der Wolf 5 zusätzlich zu dem Auslass 11 einen Einlass 13 aufweist welcher in der gewählten Orientierung in Fig. 2 einem Anschluss 8 in der Vorrichtung 1 gegenübersteht. Die als Doppelscharnier ausgebildeten Trag-Mittel 9 sind dazu ausgestaltet, den Wolf 5 zu stützen und zu Führen, und in einer Position zuhalten, die vom Bediener angesteuert wird.

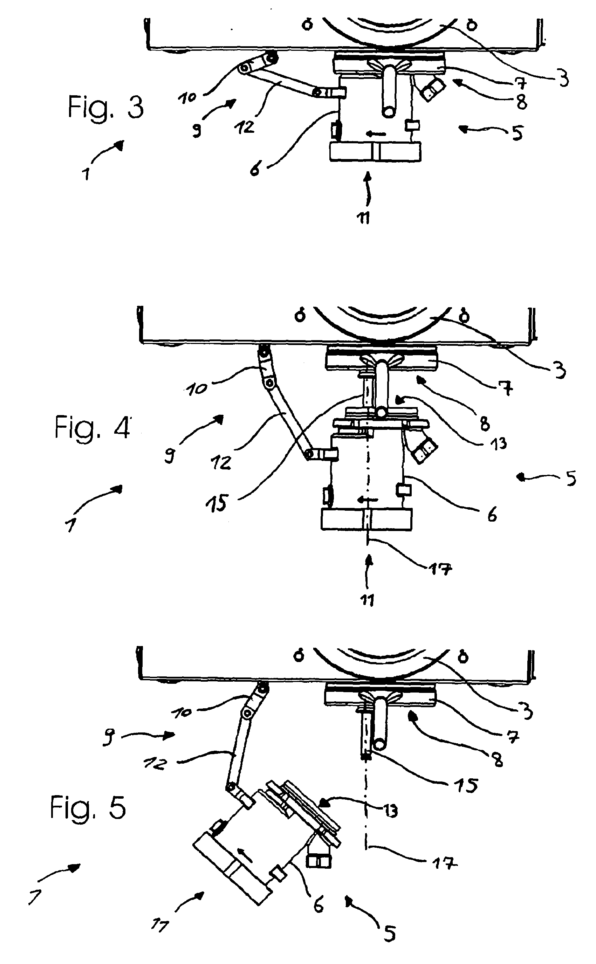

Um den Wolf 5 von den in Fig. 1 gezeigten Zustand in der in Fig. 2 gezeigten Zustand zubringen, ist es nötig, die Arretierung 7 zu lösen und den Wolf 5, insbesondere dessen Einlass 13 von dem Anschluss 8 der Vorrichtung 1 abzuziehen. Der Abzug des Wolfs 5 von der Vorrichtung 1 erfolgt zunächst koaxial zu einer Achse der Antriebsmittel, welches aus dem nachfolgenden Figuren 3 bis 7 ersichtlich wird.

Nach dem Lösen des Wolfes wird dieser so in axialer Richtung von den Antriebsmitteln abgezogen, dass die Schneidelemente des Wolfes vollständig von diesen abgekoppelt werden. Nach der vollständigen Abkopplung können auf die nachfolgend beschriebene Weise die Schneidelemente durch den Auslass 11 des Wolfes herausgedrückt werden, nachdem der Wolf soweit von der Fülleinrichtung 3 fortbewegt worden ist, dass auf Seiten des Einlasses 13 eine Druckkraft zum Herausdrücken der Schneidelemente aufgebracht werden kann.

In den Figuren 3 bis 5 sind verschiedene Betriebszustände der erfindungsgemäßen Vorrichtung 1 dargestellt. Die Darstellung entspricht einer Ansicht von oben. Die als Trichter ausgebildete Fülleinrichtung 3 ist teilweise dargestellt. Weiterhin ist den Figuren zu entnehmen, dass der Wolf 5 mittels Trag-Mittel 9, die als Doppelscharnier ausgebildet sind, mit der Vorrichtung 1 verbunden ist. Die Trag-Mittel 9 weisen in dem dargestellten Ausführungsbeispiel ein erstes Scharnierglied 10 und ein zweites Scharnierglied 12 auf. Das Scharnierglied 10 ist einerseits mit der Vorrichtung 1 schwenkbar verbunden, und anderseits schwenkbar mit dem zweiten Scharnierglied 12 verbunden. Das zweite Scharnierglied 12 ist weiterhin schwenkbar mit dem Gehäuse 6 des Wolfs 5 verbunden. Der Auslass 11 des Wolfs 5 ist in der gewählten Orientierung der Darstellung in Fig. 3 parallel zum Anschluss 8 der Vorrichtung 1 ausgerichtet. Der (nicht dargestellte) Einlass 13 des Wolfs 5 befindet sich in dem in Fig. 3 dargestellten Betriebszustand mit dem Anschluss 8 der Vorrichtung 1 in Kontakt. Der Wolf 5 ist weiterhin mittels der Arretierungsmittel 7 an der Vorrichtung 1 befestigt.

In Fig. 4 ist der Wolf 5 in einem von der Vorrichtung 1 beabstandeten Zustand dargestellt. Der Anschluss 8 der Vorrichtung 1 sind in der dargestellten Position nicht miteinander in Verbindung. Die Arretierungsmittel 7 sind gelöst. Die als Doppelscharnier ausgebildeten Trag-Mittel 9 sind im Wesentlichen gestreckt im Vergleich zu ihrer Stellung aus Fig. 3. Diese Strecklage der Trag-Mittel 9 resultiert aus der beabstandeten Position des Wolfs 5 von der Vorrichtung 1.

Der Wolf 5 ist von dem Betriebszustand aus Fig. 3 in dem Betriebszustand in Fig. 4 gebracht worden, in dem eine Bewegung vollzogen worden ist, die den Wolf 5 im Wesentlichen entlang der Längsachse 17 führt. Die Längsachse 17 ist im Wesentlichen koaxial zu Antriebsmitteln 15, die in der gewählten Ausführungsform als Antriebswelle ausgeführt sind. Das Strecken der Scharnierglieder 10, 12 und die koaxiale Bewegung des Wolfs 5 entlang der Längsachse 17 der Antriebsmittel 15 bedingen sich hierbei gegenseitig. In dieser Position wird der Wolf 5 durch die Trag-Mittel 9 in seiner von der Vorrichtung beabstandeten Position gehalten. Nach dem der Wolf 5 entlang der Achse 17 von der Vorrichtung 1 abgezogen worden ist, ist es möglich, den Wolf 5 noch weiter zu bewegen.

Ein möglicher Bewegungszustand ist nachfolgend in Fig. 5 abgebildet. Der Wolf 5 wird von dem Betriebszustand aus Fig. 4 in den Betriebszustand in Fig. 5 gebracht, in dem er zu einer Seite hin geschwenkt wird. Diese Schwenkbewegung wird durch die Trag-Mittel 9 unterstützt, in dem das erste Scharnierglied 10 und das zweite Scharnierglied 12 der Trag-Mittel 9 sowie der Wolf 5 eine ebene Bewegung vollführen, die in der gewählten Ausführungsform einem dreifachen Pendel entspricht. So sind das erste Scharnierglied 10, und das zweite Scharnierglied 12 und der Wolf 5 ausgebildet, unabhängig von einander bewegt zu werden. In dem in Fig. 5 gezeigten Betriebszustand befindet sich der Wolf nicht mehr in einer zur Längsachse 17 der Antriebsmittel 15 koaxialen Ausrichtung.

Aus diesen Figuren 3 bis 5 wird ersichtlich, dass nach erfolgtem koaxialen Abziehvorgang der Wolf 5 in eine beliebige Position gebracht werden kann, um dem Bediener einen optimalen Zugang zum Inneren des Gehäuses 6 des Wolfs 5 zu verschaffen. Je nach konstruktiver Ausgestaltung des Wolfs 5 ist ein Zugang zum Wolf 5 somit sowohl von der Seite des Einlasses 13 als auch von der Seite des Auslasses 11 möglich.

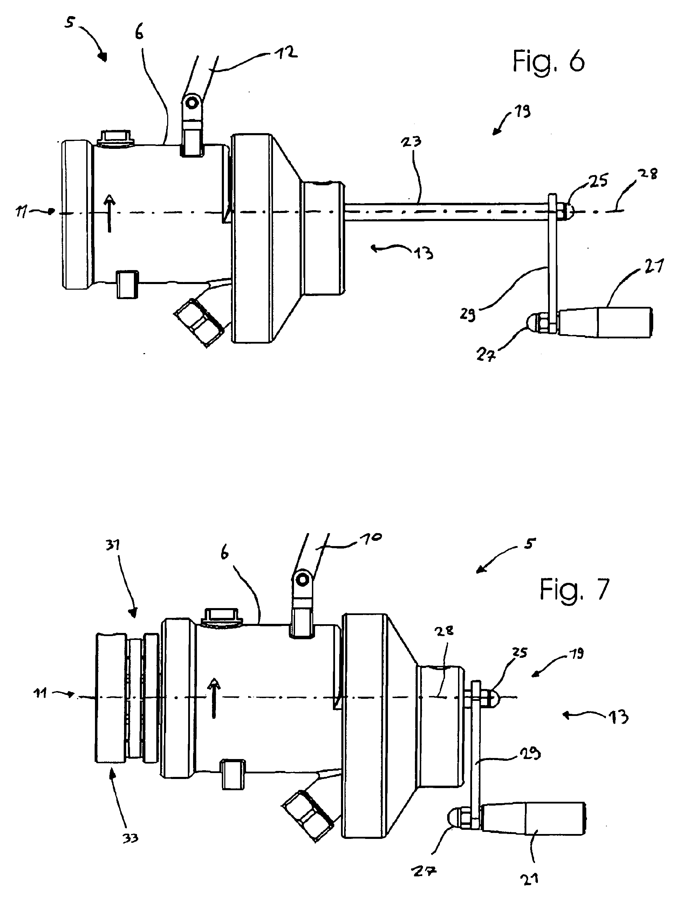

Die Funktionsweise eines Abdrückwerkzeuges 19 gemäß der vorliegenden Erfindung ist in den Figuren 6 und 7 illustriert. In Fig. 6 ist der Wolf 5, welcher mit einem zweiten Scharnierglied 12 verbunden ist, dargestellt. Das Gehäuse 6 des Wolfs 5 nimmt die Schneidelemente 31 sowie die Lochscheibe 33 auf. Dies ist insbesondere in Fig. 7 zuerkennen. Die dort dargestellten Schneidelemente 31 und die Lochscheibe 33 sind im Wesentlichen zentral im Gehäuse 6 des Wolfs 5 angeordnet und drehbar um eine Rotationsachse 28 gelagert. Das Abdrückwerkzeug 19 erstreckt sich in den Figuren 6 und 7 entlang der Rotationsachse 28 zumindest teilweise in das Innere des Gehäuses 6 des Wolfs 5 hinein. Das Abdrückwerkzeug 19 weist einen Führungsabschnitt 23 auf, der im vorliegenden Ausführungsbeispiel als teilweise mit einem Gewinde versehene (Gewinde-) Stange mit zylindrischem Querschnitt ausgebildet ist. Der Führungsabschnitt 23 ist mittels Befestigungsmitteln 25 mit einem Arm 29 verbunden. Die Befestigungsmittel 25 sind im vorliegenden Ausführungsbeispiel als Schraubverbindung ausgebildet. Mit dem Arm 29 ist wiederum über Befestigungsmittel 27 eine Kurbel 21 verbunden. Die Befestigungsmittel 27 sind wie auch die Befestigungsmittel 25 im vorliegenden Ausführungsbeispiel als Schraubenverbindung ausgestaltet. Es kann vorteilhaft sein, die Kurbel 21 drehbar an dem Arm 29 zu befestigen. Das Abdrückwerkzeug 19 ist in den Figuren 6 und 7 mit den Führungsabschnitt 23 auf der Seite des Einlasses 13 des Wolfs 5 in das Gehäuse 6 des Wolfs 5 eingeführt. In Fig. 6 ist der Führungsabschnitt 23 des Abdrückwerkzeuges 19 im Wesentlichen außerhalb des Gehäuses 6 des Wolfs angeordnet, und die Schneidelemente 31 sowie die Lochscheibe 33 sind im Wesentlichen im Innern des Gehäuses 6 des Wolfs 5 angeordnet. In Fig. 7 ist der Führungsabschnitt 23 des Abdrückwerkzeuges 19 im Wesentlichen innerhalb des Wolfs 5 angeordnet, und die Schneidelement 31 sowie die Lochscheibe 33 sind im Wesentlichen außerhalb des Wolfs 5 auf der Seite des Auslasses 11 angeordnet.

Das Austreiben der Schneidelemente 31 und der Lochscheibe 33 aus dem Wolf wird durchgeführt, in dem das Abdrückwerkzeug 19 mit dem Führungsabschnitt 23 im vorliegenden Fall auf der Seite des Einlasses 13 in den Wolf eingeführt wird. Anschließend wird durch Ausüben einer Kraft in der Richtung des Wolfs auf das Abdrückwerkzeug 19 insbesondere auf die Kurbel 21 und den Kurbelarm 29, dass Innere des Wolfs 5, insbesondere die Schneidelemente 31 und die Lochscheibe 33, in Richtung der Kraftausübung aus dem Wolf 5 heraus gepresst. In dem Ausführungsbeispiel der Figuren 6 und 7 entspricht dies der Bewegung in Richtung der Seite des Auslasses 11 des Wolfs 5. Abhängig vom Konstruktionsprinzip ist es auch denkbar, dass der Vorgang des Austreibens der Schneidelemente 31 beziehungsweise der Lochscheibe 33 durch eine Rotationsbewegung des Abdrückwerkzeugs 19 mittels der Kurbel 21 erzeugt und/oder unterstützt wird.

In einem bevorzugten Ausführungsbeispiel wird die durch die Kurbel 21 aufgebrachte Drehbewegung mittels der Gewinde- Stange, die mit einem Gewinde des Abdrückwerkzeugs 19 zusammenwirkt, umgewandelt in eine axiale Vorschubbewegung und Kraft, durch welche die Schneidelemente durch den Auslass 11 des Wolfes herausgedrückt werden. Die Drehbewegung kann statt mittels einer Kurbel auch motorisch mittels eines Antriebsmotors aufgebracht werden, beispielsweise mittels eines Elektromotors oder dergleichen.

## Patentansprüche

1. Vorrichtung (1) zum Fördern und Bearbeiten von Lebensmitteln, insbesondere Fleisch, mit einer Fülleinrichtung (3), einem Wolf (5) mit einem Einlass (13) und einem Auslass (11), und Antriebsmitteln (15) zum Antrieb von in einem Gehäuse (6) des Wolfes (5) angeordneten Schneidelementen (31),
wobei die Schneidelemente (31) vollständig von den Antriebsmitteln (15) entkoppelbar sind und
**gekennzeichnet durch** Trag-Mittel (9) zum Tragen des Wolfes (5) während des Montierens, die ausgebildet sind, den Wolf (5) während einer Bewegung koaxial zu einer Achse (17) der Antriebsmittel (15) zu tragen,
wobei die Tragmittel als mehrgliedriges Scharnier so ausgebildet sind, dass der Wolf (5) in einem ersten Bereich im Wesentlichen koaxial zu der Achse (17) der Antriebsmittel (15) bewegbar, und in einem zweiten Bereich in eine seitliche Richtung schwenkbar ist
und wobei die Schneidelemente (31) so im Gehäuse (6) des Wolfes (5) angeordnet sind, dass sie mittels einer auf der Seite des Einlasses (13) aufbringbaren Kraft durch den Auslass (11) aus dem Gehäuse (6) des Wolfes (5) entfernbar sind.

2. Vorrichtung (1) nach Anspruch 1,
**dadurch gekennzeichnet, dass** die Schneidelemente (31) mittels eines auf der Seite des Einlasses (13) in das Innere des Wolfs (5) einführbaren Abdrückwerkzeugs (19) aus dem Gehäuse (6) herausdrückbar sind.

3. Vorrichtung (1) nach Anspruch 2,
**dadurch gekennzeichnet, dass** eine oder mehrere Lochscheiben (33) so in dem Wolf (5) angeordnet sind, dass sie mittels des Abdrückwerkzeugs (19) zusammen mit den Schneidelementen (31) auf der Seite des Auslasses (11) aus dem Gehäuse (6) des Wolfs (5) entfernbar sind.

4. Vorrichtung (1) nach Anspruch 2 oder 3,
**dadurch gekennzeichnet, dass** das Gehäuse (6) des Wolfs (5) auf der Seite des Einlasses (13) eine vorzugsweise Im Wesentlichen zentral angeordnete Öffnung zur Aufnahme des Abdrückwerkzeugs (19) aufweist.

5. Vorrichtung (1) nach Anspruch 1,
**dadurch gekennzeichnet, dass** die Trag-Mittel (9) als eine Linearführung ausgebildet sind.

6. Vorrichtung nach einem der vorstehenden Ansprüche,
**dadurch gekennzeichnet, dass** die am Auslass (11) des Wolfes (5) angeordnete Lochscheibe in deren Zentrum geschlossen ist.

7. Vorrichtung (1) nach einem der vorstehenden Ansprüche,
**dadurch gekennzeichnet, dass** der Wolf (5) Griffe aufweist, welche zur Bewegung des Wolfes (5) relativ zu der Vorrichtung (1) ausgebildet sind.

8. Vorrichtung (1) nach einem der vorstehenden Ansprüche,
**gekennzeichnet durch** Arretierungsmittel (7), die so ausgebildet sind, dass sie das Gehäuse (6) des Wolfs (5) lösbar mit einem Anschluss (8) der Vorrichtung (1) verbinden.

9. Verfahren zur Demontage eines Wolfes (5) von einer Vorrichtung (1) gemäß einem der Ansprüche 1 bis 8 zum Fördern und Bearbeiten von Lebensmitteln, umfassend die Schritte:
Entkoppeln des Wolfes (5) von Antriebsmitteln (15), und
Herausdrücken von Schneidelelementen (31) auf der Seite eines Auslasses (11) aus einem Gehäuse (6) des Wolfes (5) mittels einer auf der Seite des Einlasses (13) aufbringbaren Kraft, **dadurch gekennzeichnet, dass**
der Vorgang des Entkoppelns des Wolfes in den Schritten axiales Abziehen des Wolfes (5) von der Vorrichtung (1), und zumindest teilweises Schwenken des Wolfes (5) zu einer Seite hin ausgeführt wird.

10. Verfahren nach Anspruch 9,
**dadurch gekennzeichnet, dass** das Herausdrücken der Schneidelemente (31) aus dem Gehäuse (6) des Wolfes (5) mittels
Einführens eines Abdrückwerkzeugs (19) in das Innere des Wolfes (5) auf der Seite des Einlasses (13),
Aufbringen einer Druckkraft auf die Schneidelemente in Richtung der Seite des Auslasses (11) des Gehäuses (6) mittels des Abdrückwerkzeugs, und
Herausdrücken der Schneidelemente (31) aus dem Wolf (5) durchgeführt wird.

11. Verfahren nach mindestens einem der Ansprüche 9 bis 10,
**dadurch gekennzeichnet, dass** eine oder mehrere Lochscheiben (33) zusammen mit den Schneidelementen (31) aus dem Wolf herausgedrückt werden.

12. Abdrückwerkzeug (19) zur Verwendung mit der Vorrichtung (1) nach einem der Ansprüche 1 bis 8 bzw. in einem Verfahren nach einem der Ansprüche 9 oder 10 oder 11, das zur Einführung zumindest eines Abschnittes (13) in das Innere eines Wolfes (5) ausgebildet ist, und eine Kontaktfläche aufweist, die mit Schneidelementen (31) und / oder einer oder mehreren Lochscheiben (33) eines Wolfes (5) in kraft- oder formschlüssigen Kontakt bringbar ist,
**gekennzeichnet durch** eine Kurbel (21).

13. Abdrückwerkzeug (19) nach Anspruch 12,
**dadurch gekennzeichnet, dass** es Anschlussmittel zum Ansetzen an das Gehäuse (6) des Wolfes aufweist.

14. Abdrückwerkzeug nach einem der vorstehenden Ansprüche,
**dadurch gekennzeichnet, dass** der einführbare Abschnitt (13) so ausgebildet ist, die Schneidelemente (31) mittels einer auf der Seite des Einlasses (13) auf die Schneidelemente (31) aufbringbaren Kraft durch den Auslass (11) aus dem Gehäuse (6) des Wolfes (5) zu entfernen.

15. Abdrückwerkzeug nach einem der vorstehenden Ansprüche,
**dadurch gekennzeichnet, dass** mittels einer Gewinde-Stange, die mit einem Gewinde des Abdrückwerkzeugs (19) zusammenwirkt, eine vorzugsweise durch die Kurbel oder motorisch aufgebrachte Drehbewegung umwandelbar ist in eine axiale Vorschubbewegung und Kraft, durch welche die Schneidelemente (31) durch den Auslass (11) des Wolfes (5) herausgedrückt werden können.

## Claims

1. A device (1) for conveying and processing foodstuffs, in particular meat, having a filling device (3), a passing machine (5) with an inlet (13) and an outlet (11), and drive means (15) to drive cutting elements (31) arranged in a housing (6) of the passing machine (5),
wherein the cutting elements (31) can be uncoupled completely from the drive means (15) and
**characterised by** bearing means (9) to bear the passing machine (5) during mounting, which are designed to bear the passing machine (5) during a motion coaxial to an axis (17) of the drive means (15),
wherein the bearing means are designed as a multi-member hinge in such a manner that the passing machine (5) is in a first region movable substantially coaxial to the axis (17) of the drive means (15) and in a second region pivotable in a lateral direction
and wherein the cutting elements (31) are arranged in the housing (6) of the passing machine (5) in such a manner that they are removable from the housing (6) of the passing machine (5) through the outlet (11) by means of a force able to be applied on the side of the inlet (13).

2. A device (1) according to claim 1, **characterised in that** the cutting elements (31) can be pushed out of the housing (6) by means of a driving-out tool (19) insertable into the interior of the passing machine (5) on the side of the inlet (13).

3. A device (1) according to claim 2, **characterised in that** one or a plurality of perforated discs (33) are arranged in the passing machine (5) in such a manner that together with the cutting elements (31) they can be removed from the housing (6) of the passing machine (5) on the side of the outlet (11) by means of the driving-out tool (19).

4. A device (1) according to claim 2 or 3, **characterised in that** the housing (6) of the passing machine (5) has, on the side of the inlet (13), a preferably substantially centrally arranged opening to receive the driving-out tool (19).

5. A device (1) according to claim 1, **characterised in that** the bearing means (9) is in the form of a linear guide.

6. A device according to any one of the preceding claims, **characterised in that** the perforated disc arranged at the outlet (11) of the passing machine (5) is closed in its centre.

7. A device (1) according to any one of the preceding claims, **characterised in that** the passing machine (5) has grips designed for movement of the passing machine (5) relative to the device (1).

8. A device (1) according to any one of the preceding claims, **characterised by** securing means (7) which are designed in such a manner that they detachably connect the housing (6) of the passing machine (5) to a connection (8) of the device (1).

9. A method of disassembling a passing machine (5) from a device (1) according to any one of claims 1 to 8 for conveying and processing foodstuffs, comprising the steps:
uncoupling of the passing machine (5) from drive means (15), and
pushing of cutting elements (31) out of a housing (6) of the passing machine (5) on the side of an outlet (11) by means of a force able to be applied on the side of the inlet (13), **characterised in that** the procedure of uncoupling the passing machine is carried out in the steps
axial drawing away of the passing machine (5) from the device (1), and at least partial pivoting of the passing machine (5) to one side.

10. A method according to claim 9, **characterised in that** the pushing of the cutting elements (31) out of the housing (6) of the passing machine (5) is carried out by means of
introduction of a driving-out tool (19) into the interior of the passing machine (5) on the side of the inlet (13),
application of a pressure force to the cutting elements in the direction of the side of the outlet (11) of the housing (6) by means of the driving-out tool, and
pushing of the cutting elements (31) out of the passing machine (5).

11. A method according to at least one of claims 9 to 10, **characterised in that** one or a plurality of perforated discs (33) are pushed out of the passing machine together with the cutting elements (31).

12. A driving-out tool (19) for use with the device (1) according to any one of claims 1 to 8 or in a method according to any one of claims 9 or 10 or 11, which is designed for introduction of at least one portion (13) into the interior of a passing machine (5) and which has a contact surface able to be brought into non-positive locking or positive locking contact with cutting elements (31) and/or one or a plurality of perforated discs (33) of a passing machine (5), **characterised by** a crank (21).

13. A driving-out tool (19) according to claim 12, **characterised in that** it has connection means for fastening to the housing (6) of the passing machine.

14. A driving-out tool according to any one of the preceding claims, **characterised in that** the insertable portion (13) is designed in a manner to remove the cutting elements (31) from the housing (6) of the passing machine (5) through the outlet (11) by means of a force able to be applied to the cutting elements (31) on the side of the inlet (13).

15. A driving-out tool according to any one of the preceding claims, **characterised in that** a rotary motion, preferably exerted by the crank or by a motor, can be converted by means of a threaded bar which cooperates with a thread of the driving-out tool (19) into an axial feed motion and force, by which the cutting elements (31) can be pushed out through the outlet (11) of the passing machine (5).

## Revendications

1. Dispositif (1) de transport et de traitement d'aliments, notamment de viande, ledit dispositif comportant un mécanisme de remplissage (3), un hachoir (5) comportant une entrée (13) et une sortie (11), et des moyens d'entraînement (15) pour entraîner des éléments de coupe (31) disposés dans un boîtier (6) du hachoir (5),
les éléments de coupe (31) étant totalement découplés des moyens d'entraînement (15), et
**caractérisé par** des moyens de support (9) pour supporter le hachoir (5) pendant le montage, lesquels moyens sont conformés pour supporter le hachoir (5) pendant un déplacement coaxial à un axe (17) des moyens d'entraînement (15),
les moyens de support étant conformés en charnière à éléments multiples de sorte que le hachoir (5) est apte à se déplacer dans une première région sensiblement coaxialement à l'axe (17) des moyens d'entraînement (15), et apte à pivoter dans une seconde région dans une direction latérale,
et les éléments de coupe (31) étant disposés dans le boîtier (6) du hachoir (5) de sorte qu'ils peuvent être retirés du boîtier (6) du hachoir (5) par la sortie (11) au moyen d'une force pouvant être appliquée du côté de l'entrée (13).

2. Dispositif (1) selon la revendication 1, **caractérisé en ce que** les éléments de coupe (31) peuvent être extraits du boîtier (6) au moyen d'un outil d'éjection (19) pouvant être inséré à l'intérieur du hachoir (5) du côté de l'entrée (13).

3. Dispositif (1) selon la revendication 2, **caractérisé en ce qu'**un ou plusieurs disques perforés (33) sont disposés dans le hachoir (5) de sorte qu'ils peuvent être retirés du boîtier (6) du hachoir (5) du côté de la sortie (11) conjointement avec les éléments de coupe (31) au moyen de l'outil d'éjection (19).

4. Dispositif (1) selon la revendication 2 ou 3, **caractérisé en ce que** le boîtier (6) du hachoir (5) comporte du côté de l'entrée (13) une ouverture disposée de préférence sensiblement au centre et destinée à recevoir l'outil d'éjection (19).

5. Dispositif (1) selon la revendication 1, **caractérisé en ce que** les moyens de support (9) sont conformés en guide linéaire.

6. Dispositif selon l'une des revendications précédentes, **caractérisé en ce que** le disque perforé disposé au niveau de la sortie (11) du hachoir (5) est fermé en son centre.

7. Dispositif (1) selon l'une des revendications précédentes, **caractérisé en ce que** le hachoir (5) possède des poignées qui sont conformées pour déplacer le hachoir (5) par rapport au dispositif (1).

8. Dispositif (1) selon l'une des revendications précédentes, **caractérisé par** des moyens de blocage (7) qui sont conformés de telle sorte qu'ils relient le boîtier (6) du hachoir (5) de façon amovible à un raccord (8) du dispositif (1).

9. Procédé de démontage d'un hachoir (5) d'un dispositif (1) selon l'une des revendications 1 à 8 pour transporter et traiter des aliments, ledit procédé comportant les étapes :
de découplage du hachoir (5) de moyens d'entraînement (15), et
d'extraction d'éléments de coupe (31) d'un boîtier (6) du hachoir (5) du côté d'une sortie (11) au moyen d'une force qui peut être appliquée du côté de l'entrée (13), **caractérisé en ce que**
le processus de découplage du hachoir est effectué dans les étapes d'extraction axiale du hachoir (5) du dispositif (1), et de pivotement au moins partiel du hachoir (5) sur un côté.

10. Procédé selon la revendication 9, **caractérisé en ce que** l'extraction des éléments de coupe (31) du boîtier (6) du hachoir (5) est effectué par
introduction d'un outil d'éjection (19) à l'intérieur du hachoir (5) du côté de l'entrée (13),
application d'une force de pression sur les éléments de coupe en direction du côté de la sortie (11) du boîtier (6) au moyen de l'outil d'éjection, et
d'extraction des éléments de coupe (31) du hachoir (5).

11. Procédé selon au moins une des revendications 9 à 10, **caractérisé en ce qu'**un ou plusieurs disques perforés (33) sont extraits du hachoir conjointement avec les éléments de coupe (31).

12. Outil d'éjection (19) destiné à être utilisé avec le dispositif (1) selon l'une des revendications 1 à 8 ou dans un procédé selon l'une des revendications 9 ou 10 ou 11, lequel outil est conformé pour introduire au moins une portion (13) à l'intérieur d'un hachoir (5), et présente une surface de contact qui peut être amenée en contact d'adhérence ou de complémentarité de formes avec des éléments de coupe (31) et/ou un ou plusieurs disques perforés (33) d'un hachoir (5),
**caractérisé par** une manivelle (21).

13. Outil d'éjection (19) selon la revendication 12, **caractérisé en ce qu'**il comporte des moyens de raccordement pour la fixation au boîtier (6) du hachoir.

14. Outil d'éjection selon l'une des revendications précédentes, **caractérisé en ce que** la portion introduite (13) est conformée de façon à retirer les éléments de coupe (31) du boîtier (6) du hachoir (5) par la sortie (11) au moyen d'une force qui peut être appliquée sur les éléments de coupe (31) du côté de l'entrée (13).

15. Outil d'éjection selon l'une des revendications précédentes, **caractérisé en ce qu'**un mouvement de rotation, communiquée avantageusement par la manivelle ou un moteur, peut être converti, au moyen d'une barre filetée qui coopère avec un filetage de l'outil d'éjection (19), en un mouvement d'avancement axial et une force par lesquels les éléments de coupe (31) peuvent être extraits par la sortie (11) du hachoir (5).
